# EUROPÄISCHE PATENTSCHRIFT

(11) **EP 3 212 950 B1**
(45) Veröffentlichungstag und Bekanntmachung des Hinweises auf die Patenterteilung: **22.04.2020**
(21) Anmeldenummer: 15785116.3
(22) Anmeldetag: 27.10.2015
(51) Int. Cl.: F16C 33/58

(54) **WÄLZLAGER UND LAGERRING FÜR EIN SOLCHES WÄLZLAGER**
ROLLING BEARING AND BEARING RING FOR SUCH A BEARING
PALIER À ROULEMENT ET BAGUE DE PALIER POUR UN TEL PALIER

(30) Priorität: 31.10.2014 DE 102014222278
(43) Veröffentlichungstag der Anmeldung: 06.09.2017
(73) Patentinhaber: Aktiebolaget SKF, 415 50 Göteborg (SE)
(72) Erfinder: HOFMANN, Sabine, 97072 Würzburg (DE); LIANG, Baozhu, 97456 Hambach (DE); ULLMANN, Johannes, 97539 Wonfurt (DE)
(74) Vertreter: Kuhstrebe, Jochen
(86) Internationale Anmeldenummer: PCT/EP2015/074828
(87) Internationale Veröffentlichungsnummer: WO 2016/066623

(56) Entgegenhaltungen:
- BE-A3- 1 017 335
- JP-A- 2014 001 800
- US-A1- 2005 132 554
- US-A1- 2011 075 959

## Beschreibung

Vorliegende Erfindung betrifft ein Wälzlager gemäß dem Oberbegriff von Patentanspruch 1, sowie einen Lagerring für ein solches Wälzlager.

Um Wälzlager oder Wälzlagerringe an ihre Einbauposition zu bringen, ist es oftmals nötig, die Wälzlager insgesamt oder die Wälzlagerringe einzeln anzuheben und zu bewegen. Insbesondere bei großen Wälzlagern, wie beispielsweise für Windkraftanlagen, ist es unerlässlich, die Wälzlager maschinell anheben zu können.

Bei Wälzlagern im zusammengebauten Zustand, die zusätzlich einen zweiteiligen Außenring aufweisen, ist ein derartiges Anheben und Bewegen problemlos möglich, da ein Hebewerkzeug einfach in den von dem zweiteiligen Lageraußenring gebildeten Spalt eingreifen kann und so das Lager als Gesamtteil angehoben werden kann. Soll jedoch nur ein einzelner Ring angehoben werden, oder ist der Außenring einteilig gefertigt, so ist ein Eingriff an der Seitenfläche nicht möglich.

Es wurden deshalb im Stand der Technik an den Seitenflächen der Lagerringe Gewindebohrungen angebracht, in die beispielsweise eine Schraube eingedreht werden kann, um daran das Hebewerkzeug zu befestigen und den Lagerring bzw. das Wälzlager selbst anzuheben. Nachteilig an diesem Stand der Technik ist jedoch, dass im Bereich der Gewindebohrung an dem Lagerring Risse aufgrund von Zugspannungen auftreten können. Derartige Zugspannungen entstehen insbesondere durch Presspassung zwischen Innenring und Welle oder Außenring und Gehäuse. Dadurch wird der Lagerring beschädigt und der Lagerbetrieb muss eingestellt werden. Zudem ist bei manchen Lagern aufgrund der Lagerringgeometrie das Einbringen einer Gewindebohrung nicht möglich, da eine zur Verfügung stehende Lagerringdicke zu gering ausgebildet ist.

Wälzlager mit einer Aussparung in der Innenfläche eines der Lagerringe sind aus der JP 2014-1800 A und der US 2005/0132554 A1 bekannt.

Aufgabe vorliegender Erfindung ist es deshalb, eine Möglichkeit bereitzustellen, die ein maschinelles Heben und Bewegen eines Wälzlagers bzw. eines einzelnen Lagerrings ermöglicht, ohne die strukturelle Stabilität des Rings oder des Lagers einzuschränken.

Diese Aufgabe wird durch einen Lagerring gemäß Patentanspruch 1, sowie ein Wälzlager gemäß Patentanspruch 9 gelöst.

Erfindungsgemäß wird ein Lagerring für ein Wälzlager mit einer vorzugsweise axial verlaufenden Außenfläche, zwei sich vorzugsweise radial erstreckenden Seitenflächen, und einer Innenfläche, die dazu ausgelegt ist, zumindest teilweise einen Wälzkörper zu kontaktieren, bereitgestellt. Um einen derartigen Lagerring ohne strukturelle Beeinträchtigung über Gewindebohrungen anheben zu können, sind erfindungsgemäß in der Innenfläche eines der Lagerringe mindestens zwei Aussparungen ausgebildet, die axial über den Wälzkörper hinweg voneinander beabstandet sind, und die dazu ausgelegt sind, mit einem Hebewerkzeug zusammenzuwirken, wobei die Innenfläche eine Wälzkörperkontaktfläche und axial seitlich neben der Wälzkörperkontaktfläche und über den Wälzkörper hinweg voneinander beabstandet, eine erste Randfläche und eine zweite Randfläche aufweist, wobei in der ersten und der zweiten Randfläche die mindestens eine Aussparung ausgebildet ist und wobei die erste und zweite Randfläche als erste und zweite Lagerringschulter ausgebildet ist.

Dabei ist insbesondere vorteilhaft, wenn sich einer der Lagerringe axial über den andere Lagerring erstreckt, also einer der Lagerringe axial länger ausgebildet ist als der andere Lagerring. Dadurch kann die Zugänglichkeit des Hebewerkzeugs zu der Aussparung verbessert werden.

Gemäß einem weiteren vorteilhaften Ausführungsbeispiel erstreckt sich eine Tiefe der Aussparung im Wesentlichen radial. Dadurch kann von radial außen oder von radial innen ein Werkzeug in die Aussparung eingebracht werden, so dass der Lagerring einfach in axialer Richtung angehoben werden kann. Die Tiefe T kann dabei an das Gewicht des Lagerrings und/oder das Hebewerkzeug angepasst sein. Üblicherweise ist eine Tiefe von mindestens 1mm vorgesehen.

Damit ein gewisses Spiel für das Einbringen des Hebewerkzeugs vorgesehen sein kann, erstreckt sich vorzugsweise eine Länge der Aussparung im Wesentlichen entlang des Umfangs des Lagerrings.

Gemäß einem weiteren vorteilhaften Ausführungsbeispiel ist mindestens eine Aussparung als umfänglich ausgebildete Nut ausgestaltet. Eine derartige Nut ist zum einen besonders einfach auszubilden und zum anderen kann das Hebewerkzeug an beliebiger Stelle an den Lagerring angreifen, so dass auf eine zeitaufwendige Positionierung des Hebewerkzeugs relativ zu den Aussparungen verzichtet werden kann.

Gemäß einem weiteren vorteilhaften Ausführungsbeispiel ist mindestens eine der Aussparungen als mindestens zwei diskrete Einkerbungen ausgebildet. Eine derartige Ausgestaltung ist vorteilhaft, wenn möglichst wenig Materialverlust am Lagerring aufgrund der Aussparung vorgesehen werden soll. Um eine möglichst gleichmäßige Belastung beim Heben an dem Lagerring aufzubringen, sind die Einkerbungen vorzugsweise gleichmäßig über den Umfang verteilt.

Gemäß einem weiteren vorteilhaften Ausführungsbeispiel ist die Aussparung eingefräst oder eingedreht. Dadurch kann eine einfache und schnell herzustellende Aussparung ausgebildet werden.

Gemäß einem weiteren vorteilhaften Ausführungsbeispiel ist die erste und zweite Randfläche als ein erstes und/oder zweites Bord, ausgebildet. Insbesondere bei Zylinderrollenlager und Kegelrollenlager sind Borde vorgesehen, die eine Führung der Wälzkörper ermöglichen. Da diese Borde bzw. Ringschultern oftmals eine vergrößerte Dicke aufweisen, ist eine Ausbildung der erfindungsgemäßen Aussparung an dieser Stelle besonders vorteilhaft.

Ein weiterer Aspekt vorliegender Erfindung betrifft einen Lagerring für eines der oben beschriebenen Wälzlager.

Weitere Vorteile und vorteilhafte Ausführungsformen sind in den Ansprüchen, der Beschreibung und den Zeichnungen angegeben.

Im Folgenden soll die Erfindung anhand von in den Zeichnungen dargestellten Ausführungsbeispielen näher beschrieben werden. Dabei sind die Ausführungsbeispiele rein exemplarischer Natur und sollen nicht den Schutzbereich der Anmeldung festlegen. Dieser wird allein durch die anhängigen Ansprüche definiert.

Es zeigen:
- Fig. 1:: eine schematische Schnittansicht durch ein nicht erfindungsgemäßes Wälzlager;
- Fig. 2:: eine schematische Schnittansicht durch ein bevorzugtes Ausführungsbeispiel eines erfindungsgemäßen Wälzlagers;
- Fig. 3:: eine schematische Schnittansicht durch ein weiteres nicht erfindungsgemäßes Wälzlager; und
- Fig. 4:: schematische Schnittansicht durch ein zweites bevorzugtes Ausführungsbeispiel eines erfindungsgemäßen Wälzlagers.

Im Folgenden werden gleiche oder funktionell gleichwirkende Elemente mit denselben Bezugszeichen gekennzeichnet.

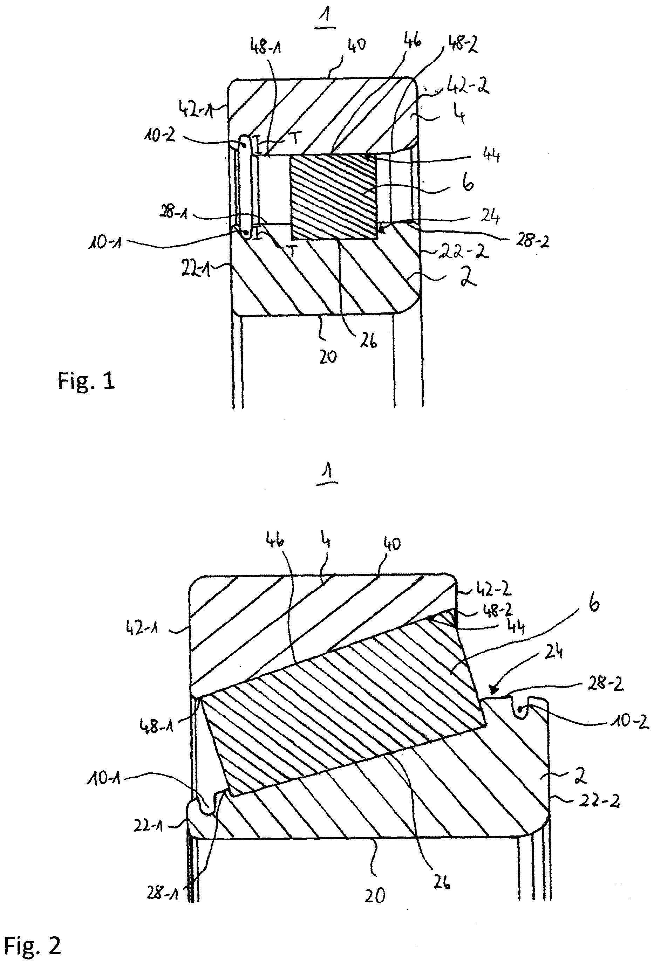

Die Fig. 1 und 2 zeigen schematisch jeweils eine Schnittansicht durch ein Wälzlager 1 mit einem Lagerinnenring 2 und einem Lageraußenring 4, zwischen denen Wälzkörper 6 angeordnet sind. Dabei ist das in Fig. 1 dargestellte Wälzlager 1 als Zylinderrollenlager ausgebildet, während in Fig. 2 ein Kegelrollenlager gezeigt ist. Es sei aber explizit darauf hingewiesen, dass auch andere als das gezeigte Wälzlager der Figur 2 erfindungsgemäß ausgestattet sein können.

Wie weiterhin Fig. 1 und Fig. 2 zu entnehmen, weisen der Lagerinnenring 2 bzw. der Lageraußenring 4 jeweils eine Lagerringaußenfläche 20; 40 auf, die sich im Wesentlichen axial erstrecken. Weiterhin weisen der Lagerinnenring 2 und der Lageraußenring 4 jeweils zwei sich im Wesentlichen radial erstreckende Seitenflächen 22-1; 22-2; 42-1, 42-2 sowie jeweils eine Innenfläche 24, 44 auf.

Die Innenflächen 24, 44 der Lagerringe 2, 4 wiederum weisen eine Wälzkörperkontaktfläche 26, 46 sowie axial seitlich davon angeordnet eine erste und zweite Randfläche 28-1, 28-2; 48-1, 48-2 auf. Weiterhin zeigen die Fig. 1 und 2, dass in den Innenflächen 24, 44 bzw. an mindestens einer der Randflächen 28-1; 28-2; 48-1; 48-2 eine Aussparung 10 ausgebildet ist, die dazu ausgelegt ist, dass in sie ein Hebewerkzeug eingreifen kann.

Die Aussparung 10 selbst kann als umfänglich ausgebildete Nut ausgebildet sein, es ist jedoch auch möglich, diskret über den Umfang verteilte Einkerbungen vorzusehen, in die ein Hebewerkzeug eingreifen kann. Eine Tiefe T der Aussparung 10 erstreckt sich im Wesentlichen radial, während eine Länge der Aussparung, insbesondere einer Einkerbung, umfänglich ausgebildet ist. Die Tiefe T kann dabei an das Gewicht des Lagerrings und/oder das Hebewerkzeug angepasst sein. Üblicherweise ist eine Tiefe von mindestens 1mm vorgesehen.

Wie weiterhin den Fig. 1 und 2 zu entnehmen, sind am Innenring 2 die seitlichen Randbereiche 28-1, 28-2 als Lagerringschultern ausgebildet, die eine größere radiale Dicke aufweisen als die Wälzkörperkontaktfläche 26. Dadurch können zum einen integral am Innenring Borde ausgebildet sein, die der Führung bzw. Halterung der Wälzkörper 6 dienen, zum anderen stärkt die größere Dicke die strukturelle Stabilität trotz ausgebildeter Aussparung 10.

Insbesondere ist Fig. 2 zu entnehmen, dass bei Kegelrollenlagern die Lagerringe 2, 4 unterschiedliche Durchmesser an der Innenfläche 24 aufweisen. So ist beispielsweise der Durchmesser der ersten Randfläche 28-1 deutlich geringer als der Durchmesser der zweiten Randfläche 28-2. Gleichzeitig ist Fig. 2 jedoch auch zu entnehmen, dass, da der erste Randbereich 28-1 des Lagerinnenrings 2 gleichzeitig als Bord für den Wälzkörper 6 ausgebildet ist, ausreichend Material zur Verfügung steht, um zum einen die Aussparung 10-1 auszubilden und zum anderen gleichzeitig für eine ausreichende strukturelle Festigkeit trotz Aussparung 10 zu sorgen.

Wie insbesondere dem in Fig. 1 dargestellten Zylinderrollenlager zu entnehmen ist, ist sowohl am Innenring 2 in dem ersten Randbereich 28-1 eine Aussparung 10-1 als auch im Außenring 4 eine Aussparung 10-2 vorgesehen. Die Aussparungen 10-1, 10-2 wiederum dienen dazu, dass ein Hebewerkezeug an den Lagerringen 2, 4 angreifen kann und die Lagerringe 2, 4 separat oder das Lager 1 als Gesamtheit bewegbar ist.

Bei dem in Fig. 2 dargestellten Kegelrollenlager 1 dagegen, ist das Lager 1 auch als Gesamtheit von einem Werkzeug hebbar. Zudem zeigt Fig. 2, dass in den Randflächen 48-1, 48-2 des Außenrings 4 keine Aussparungen vorgesehen sind. Weiterhin zeigt Fig. 2 jedoch, dass an dem Innenring 2 nicht nur eine Aussparung 10-1 an dem kleineren Durchmesser ausgebildet ist, sondern erfindungsgemäß auch an dem zweiten Randbereich 28-2 eine Aussparung 10-2 vorgesehen ist, in die ebenfalls ein Hebewerkzeug eingreifen kann. Greift das Hebewerkzeug beispielsweise in die Nut 10-1 ein, so kann das zusammengebaute Lager angehoben werden. Zudem hat Diese Ausgestaltung den Vorteil, dass egal auf welcher Seitenfläche 22-1, 22-2 das Lager 1 liegt, ein Eingriff eines Hebewerkzeugs jederzeit möglich ist.

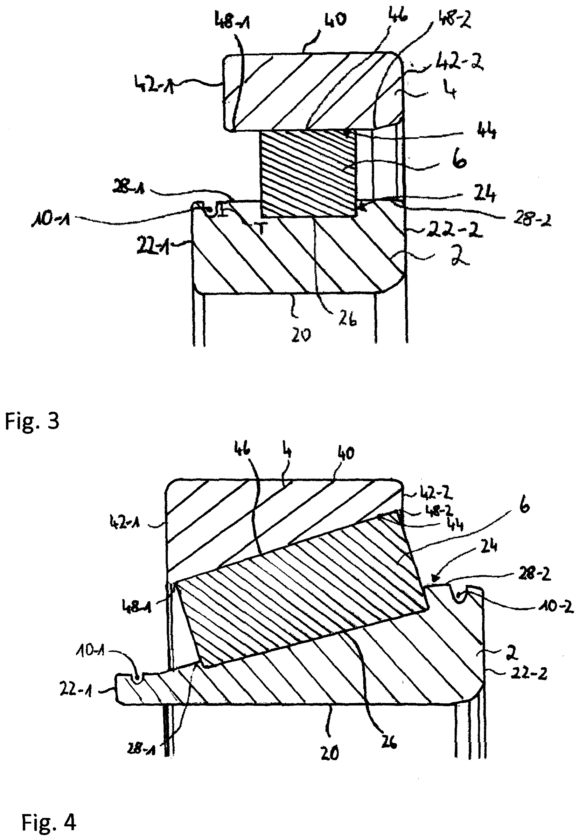

Selbstverständlich ist es ebenfalls möglich, auch ein Zylinderrollenlager, wie in Fig. 1 dargestellt, mit Aussparungen 10 an erster und zweiter Randfläche 28-1; 28-2 auszubilden. Ebenfalls erschließt sich einem Fachmann direkt, dass auch in dem Außenring 4 des in Fig. 2 dargestellten Kegelrollenlagers 1 ebenfalls Aussparungen 10 vorgesehen sein können, bzw., wie Fig. 3 zeigt, im Außenring 4 des Zylinderrollenlagers 1 keine Aussparungen vorgesehen sind.

Fig. 3 und 4 zeigen jeweils ein weiteres Ausführungsbeispiel für ein Zylinderrollenlager (Fig. 3) und ein Kegelrollenlager (Fig. 4). Im Gegensatz zu Fig. 1 bzw. Fig. 2 zeigen die Ausführungsbeispiele in Fig. 3 und 4, dass der Innenring 2 jeweils axial verlängert ausgebildet sein kann, um einen verbesserten Zugang für das Hebewerkzeug bereitzustellen. Die axiale Verlängerung kann nicht nur einseitig (Fig. 2 und Fig. 3), sondern auch zweiseitig (Fig. 4) vorgesehen sein. Bei dem in Fig. 4 gezeigten Ausführungsbeispiel, ermöglicht die axiale Verlängerung an der Seite des kleinen Durchmessers zudem, dass über die Nut 10-1 das Lager in seiner Gesamtheit angehoben werden kann.

Auch wenn die beschriebene Erfindung in den Figuren als ein Zylinderrollenlager bzw. ein Kegelrollenlager dargestellt ist, so ist für einen Fachmann klar, dass auch andere Wälzkörperlager mit entsprechend ausgebildeten Lagerringen 2, 4 ausgestattet sein können. Insgesamt kann mittels der erfindungsgemäßen Aussparungen ein Hebewerkzeug an einem Lagerring bzw. Wälzlager eingesetzt werden, mittels dem der Lagerring bzw. das Lager selbst sicher angehoben werden kann. Da die Aussparung zum Anheben nicht mehr in den Seitenflächen der Lagerringe angeordnet ist, sondern an der Innenfläche, ist der Einfluss von im Ring vorhandenen Zugspannungen aufgrund von Passungssitzen geringer als bei den aus dem Stand der Technik üblichen Bohrungen in den Seitenflächen. Dadurch kann eine größere strukturelle Stabilität der Lagerringe erreicht werden, was wiederum zu einem sicheren Lagerbetrieb führt. Beschädigungen aufgrund von Rissbildung im Lagerring sind dadurch deutlich vermieden.

### Bezugszeichenliste

- 1: Wälzlager
- 2: Lagerinnenring
- 4: Lageraußenring
- 6: Wälzkörper
- 20, 40: Lagerringaußenfläche
- 22, 42: Lagerringseitenfläche
- 24, 44: Innenfläche
- 26, 46: Wälzkörperkontaktfläche
- 28, 48: Randfläche
- 10: Aussparung
- T: Tiefe der Aussparung

## Patentansprüche

1. Wälzlager (1) mit einem ersten Lagerring (2) und einem zweiten Lagerring (4) mit jeweils einer vorzugsweise axial verlaufenden Außenfläche (20; 40), zwei sich vorzugsweise radial erstreckenden Seitenflächen (22; 42) und einer Innenfläche (24; 44), wobei die Innenflächen (24; 44) der ersten und zweiten Lagerringe (2; 4) zwischen sich mindestens einen Wälzkörper (6) aufnehmen, **dadurch gekennzeichnet, dass** in der Innenfläche (24; 44) eines der Lagerringe mindestens zwei Aussparungen (10-1, 10-2) ausgebildet sind, die axial über den Wälzkörper (6) hinweg voneinander beabstandet sind, und die dazu ausgelegt sind, mit einem Hebewerkzeug zusammenzuwirken, wobei die Innenfläche (24; 44) eine Wälzkörperkontaktfläche (26, 46) und axial seitlich neben der Wälzkörperkontaktfläche (26; 46) und über den Wälzkörper (6) hinweg voneinander beabstandet, eine erste Randfläche (28-1; 48-1) und eine zweite Randfläche (28-2; 48-2) aufweist, wobei in der ersten und der zweiten Randfläche (28-1; 28-2; 48-1; 48-2) die mindestens eine Aussparung (10) ausgebildet ist und wobei die erste und zweite Randfläche (28-1; 28-2; 48-1; 48-2) als erste und zweite Lagerringschulter ausgebildet ist.

2. Wälzlager (1) nach Anspruch 1, wobei einer der Lagerringe (2; 4) axial länger ausgebildet ist als der andere Lagerring (4; 2).

3. Wälzlager (1) nach einem der vorhergehenden Ansprüche, wobei sich eine Tiefe (T) der Aussparung (10) im Wesentlichen radial erstreckt, wobei vorzugsweise die Tiefe an das Gewicht des Lagerrings (2; 4) und/oder das Hebewerkzeug angepasst ist.

4. Wälzlager (1) nach einem der vorhergehenden Ansprüche, wobei sich eine Länge der Aussparung (10) im Wesentlichen umfänglich erstreckt.

5. Wälzlager (1) nach einem der vorhergehenden Ansprüche, wobei mindestens eine Aussparung (10) als umfänglich ausgebildete Nut ausgestaltet ist.

6. Wälzlager (1) nach einem der vorhergehenden Ansprüche, wobei mindestens eine Aussparung (10) mindestens zwei diskrete, vorzugsweise gleichmäßig über den Umfang verteilte, Einkerbungen umfasst.

7. Wälzlager (1) nach einem der vorhergehenden Ansprüche, wobei die Aussparung (10) eingefräst oder eingedreht ist.

8. Wälzlager (1) nach einem der vorhergehenden Ansprüche, wobei die erste und zweite Randfläche (28-1; 28-2; 48-1; 48-2) als ein erstes und zweites Bord ausgebildet ist.

9. Lagerring (2; 4) für ein Wälzlager (1) nach einem der vorhergehenden Ansprüche.

## Claims

1. Anti-friction bearing (1) with a first bearing ring (2) and a second bearing ring (4) with in each case one preferably axially running outer face (20; 40), two preferably radially extending side faces (22; 42) and an inner face (24; 44), the inner faces (24; 44) of the first and second bearing rings (2; 4) receiving at least one rolling body (6) between them, **characterized in that** at least two cut-outs (10-1, 10-2) are configured in the inner face (24; 44) of one of the bearing rings, which cut-outs (10-1, 10-2) are spaced apart from one another axially over the rolling body (6) and are designed to interact with a lifting tool, the inner face (24; 44) having a rolling body contact face (26, 46) and, axially laterally next to the rolling body contact face (26; 46) and spaced apart from one another over the rolling body (6), a first edge face (28-1; 48-1) and a second edge face (28-2; 48-2), the at least one cut-out (10) being configured in the first and the second edge face (28-1; 28-2; 48-1; 48-2), and the first and second edge face (28-1; 28-2; 48-1; 48-2) being configured as first and second bearing ring shoulder.

2. Anti-friction bearing (1) according to Claim 1, one of the bearing rings (2; 4) being of axially longer configuration than the other bearing ring (4; 2).

3. Anti-friction bearing (1) according to either of the preceding claims, a depth (T) of the cut-out (10) extending substantially radially, the depth preferably being adapted to the weight of the bearing ring (2; 4) and/or the lifting tool.

4. Anti-friction bearing (1) according to one of the preceding claims, a length of the cut-out (10) extending substantially circumferentially.

5. Anti-friction bearing (1) according to one of the preceding claims, at least one cut-out (10) being configured as a circumferentially configured groove.

6. Anti-friction bearing (1) according to one of the preceding claims, at least one cut-out (10) comprising at least two discrete notches which are preferably distributed uniformly over the circumference.

7. Anti-friction bearing (1) according to one of the preceding claims, the cut-out (10) being milled or turned.

8. Anti-friction bearing (1) according to one of the preceding claims, the first and second edge face (28-1; 28-2; 48-1; 48-2) being configured as a first and second rim.

9. Bearing ring (2; 4) for an anti-friction bearing (1) according to one of the preceding claims.

## Revendications

1. Palier à roulement (1) comprenant une première bague de palier (2) et une deuxième bague de palier (4) avec dans chaque cas une surface extérieure (20 ; 40) s'étendant de préférence axialement, deux surfaces latérales (22 ; 42) s'étendant de préférence radialement et une surface intérieure (24 ; 44), les surfaces intérieures (24 ; 44) de la première et de la deuxième bague de palier (2 ; 4) recevant entre elles au moins un corps de roulement (6), **caractérisé en ce que** dans la surface intérieure (24 ; 44) de l'une des bagues de palier sont réalisés au moins deux évidements (10-1, 10-2) qui sont espacés l'un de l'autre axialement au-delà du corps de roulement (6) et qui sont conçus pour coopérer avec un outil de levage, la surface intérieure (24 ; 44) présentant une surface de contact de corps de roulement (26, 46) et, axialement latéralement à côté de la surface de contact de corps de roulement (26 ; 46) et espacées l'une de l'autre au-delà du corps de roulement (6), une première surface de bord (28-1 ; 48-1) et une deuxième surface de bord (28-2 ; 48-2), l'au moins un évidement (10) étant réalisé dans la première et la deuxième surface de bord (28-1 ; 28-2 ; 48-1 ; 48-2), et la première et la deuxième surface de bord (28-1 ; 28-2 ; 48-1 ; 48-2) étant réalisées sous forme de premier et deuxième épaulement de bague de palier.

2. Palier à roulement (1) selon la revendication 1, dans lequel l'une des bagues de palier (2 ; 4) est réalisée de manière plus longue axialement que l'autre bague de palier (4 ; 2).

3. Palier à roulement (1) selon l'une quelconque des revendications précédentes, dans lequel une profondeur (T) de l'évidement (10) s'étend essentiellement radialement, de préférence la profondeur étant adaptée au poids de la bague de palier (2 ; 4) et/ou à l'outil de levage.

4. Palier à roulement (1) selon l'une quelconque des revendications précédentes, dans lequel une longueur de l'évidement (10) s'étend essentiellement sur la périphérie.

5. Palier à roulement (1) selon l'une quelconque des revendications précédentes, dans lequel au moins un évidement (10) est réalisé sous forme de rainure réalisée sur la périphérie.

6. Palier à roulement (1) selon l'une quelconque des revendications précédentes, dans lequel au moins un évidement (10) comprend au moins deux encoches discrètes, de préférence réparties uniformément sur la périphérie.

7. Palier à roulement (1) selon l'une quelconque des revendications précédentes, dans lequel l'évidement (10) est fraisé ou tourné.

8. Palier à roulement (1) selon l'une quelconque des revendications précédentes, dans lequel la première et la deuxième surface de bord (28-1 ; 28-2 ; 48-1 ; 48-2) sont réalisées sous forme de premier et deuxième bord.

9. Bague de palier (2 ; 4) pour un palier à roulement (1) selon l'une quelconque des revendications précédentes.
